# EUROPEAN PATENT APPLICATION

(11) **EP 1 036 702 A2**
(43) Date of publication of application: **20.09.2000**
(21) Application number: 00301889.2
(22) Date of filing: 08.03.2000
(51) Int. Cl.: B60Q 1/076

(54) **Apparatus for adjusting illuminating angle of headlamp for vehicle**

(30) Priority: 15.03.1999 JP 6914499
(71) Applicant: ALPS ELECTRIC CO., LTD., Ota-ku Tokyo 145 (JP)
(72) Inventor: Shimooka, Hidehito, c/o Alps Electric Co., Ltd, Tokyo 145 (JP)
(74) Representative: Kensett, John Hinton

(57) **Abstract**

An apparatus for adjusting the illuminating angle of a headlamp (1) for a vehicle, in which a motor (3) is prevented from unstably rotating due to, for example, a break in a signal line for transmitting an angle setting voltage outputted from voltage dividing means to an actuator (2), and the illuminating angle of the headlamp (1) is fixed at an illuminating angle at each occasion. A break detecting means (12) for detecting a broken state of a signal line connecting an actuator (2) for tilting a headlamp (1) and voltage dividing means (31) for outputting an angle setting voltage for setting the illuminating angle of the headlamp (1) is provided. When the broken state is detected, a voltage supply line (76) for supplying a voltage for driving the motor (3) is interrupted.

## Description

The present invention relates an illuminating angle adjusting apparatus for adjusting the light axis direction of a headlamp for a vehicle in the vertical direction.

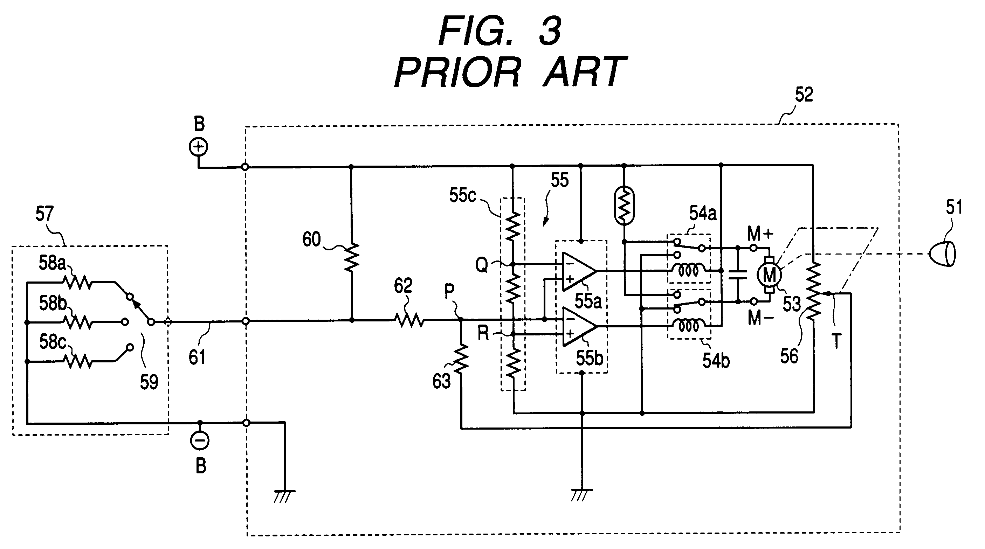

A conventional apparatus for adjusting the illuminating angle of a headlamp for a vehicle will be described with reference to the block diagram of Fig. 3.

A headlamp 51 is tilted so as to vertically change its light axis direction in accordance with the forward or reverse rotation of a motor 53 provided for an actuator 52. The vertical tilt occurs when the motor 53 is controlled by a window comparator 55 via relays 54a and 54b. The window comparator 55 has two power supply terminals. One of the power supply terminals is connected to the positive terminal of a power supply and the other one is connected to the negative terminal (ground). A potentiometer 56 is connected in parallel to the window comparator 55 and a power supply voltage is applied also to the potentiometer 56. The potentiometer 56 rotates in accordance with the rotation of the motor 53 and a voltage from the output terminal T changes.

The window comparator 55 has two comparing circuits 55a and 55b and a reference voltage setting circuit 55c. The reference voltage setting circuit 55c generates two reference voltages by dividing the power supply voltage by three resistors which are connected in series and supplies the two reference voltages to reference voltage terminals of the comparing circuits 55a and 55b.

The actuator 52 constructed as mentioned above is mounted in a housing (not shown) in which the headlamp 51 is housed.

On the other hand, a voltage dividing means 57 has a plurality of resistors 58a to 58c of different resistance values and a change-over switch 59. A power supply voltage is applied to one end of any of the resistors 58a to 58c via a feed resistor 60 and the change-over switch 59 which are arranged in series. The other ends of the resistors 58a to 58c are connected to each other and connected to the ground. Consequently, a voltage divided by the feed resistor 60 and one of the resistors 58a to 58c is obtained from the voltage dividing means 57. The divided voltage is used to set the illuminating angle of the headlamp 51 and will be called an angle setting voltage hereinbelow. The voltage dividing means 57 is provided in the cabin of a vehicle and the angle setting voltage is sent to the actuator 52 via a signal line 61.

The angle setting voltage sent from the voltage dividing means 57 and the voltage from the output terminal T of the potentiometer 56 are combined by combining resistors 62 and 63 and the combined voltage is supplied as a comparison voltage to comparison terminals of the two comparing circuits 55a and 55b.

In the configuration, when the combined voltage (voltage at the point P in Fig. 3) based on the angle setting voltage and the voltage from the output terminal T is out of the range of the two reference voltages (voltages at the points Q and R in Fig. 3) set by the reference voltage setting circuit 55c, the motor 53 is rotated by the window comparator 55 so that the combined voltage is changed to be within the range of the two reference voltages. The voltage from the output terminal T of the potentiometer 56 changes according to the motor 53 and, in association with this, the combined voltage becomes close to the two reference voltages. When the combined voltage enters the range of the two reference voltages, the rotation of the motor 53 is stopped. The light axis direction of the headlamp 51 is therefore changed by the operation of the change-over switch 59 in the voltage dividing means 57 and the illuminating angle is changed.

Vibration, impact, and the like are always applied to a vehicle during a use and the vehicle is used under a severe ambient temperature condition. There is consequently a fear that the signal line 61 connected between the voltage dividing means 57 and the actuator 52 is broken. In the case of a break, for example, the comparison voltage supplied to the window comparator 55 is only the voltage from the output terminal T of the potentiometer 56. Consequently, the window comparator 55 cannot control the voltage of the output terminal T of the potentiometer 56 and there is the possibility that the light axis of the headlamp is oriented in an unexpected direction.

In the case of operating the switch 59 to change the illuminating angle appropriate to a state of a load on the vehicle, the contacts are temporarily separated from each other during the changing-over of the switch 59. In such a case as well, the comparison voltage supplied to the window comparator 55 is only the voltage from the output terminal of the potentiometer 56. In a manner similar to the breakage of the signal line 61, there is the possibility that the light axis of the headlamp is oriented in an unexpected direction. The driver of the vehicle or the driver of a vehicle driving ahead may feel unpleasant by the operation during driving.

Further, when the signal line 61 is not completely broken but is nearly broken, the comparison voltage supplied to the window comparator 55 causes what is called chattering. The light axis direction of the headlamp is not easily fixed and the illuminating angle always fluctuates.

When such a phenomenon occurs, the forward illumination face is not easily fixed, so that the driver on an oncoming vehicle is dazzled. It is a very dangerous situation.

It is therefore an object of the invention to provide an apparatus for adjusting the illuminating angle of a headlamp for a vehicle, in which a motor is prevented from unstably rotating due to, for example, a break in a signal line for sending an angle setting voltage outputted from a voltage dividing means to an actuator and the illuminating angle of the headlamp is fixed at an illuminating angle at each occasion.

As means for solving the problems, according to the invention, there is provided an apparatus for adjusting the illuminating angle of a headlamp for a vehicle, comprising: an actuator for tilting a headlamp; voltage dividing means for outputting an angle setting voltage for setting an illuminating angle of the headlamp; and a signal line connected between the actuator and the voltage dividing means, wherein the actuator has: a motor for changing the tilt angle of the headlamp; and rotating means for rotating the motor in the forward or reverse direction by the angle setting voltage, the angle setting voltage is supplied to the rotating means via the signal line, the actuator is provided with break detecting means for detecting a broken state of the signal line, and when the break detecting means detects the broken state, a voltage supply line for supplying a voltage for driving the motor is interrupted.

Preferably, the voltage supply line has a high potential side voltage supply line provided between the motor and the positive terminal of a power supply and a low potential side voltage supply line provided between the motor and the negative terminal of the power supply, switching means is provided at a some midpoint in the low potential side voltage supply line, and the low potential side voltage supply line is interrupted by the switching means in the broken state.

Preferably, the actuator has an angle setting voltage input terminal to which the signal line is connected and the angle setting voltage is supplied, the break detecting means includes a PNP transistor having a base connected to the angle setting voltage input terminal side, an emitter connected to the positive terminal side of the power supply, and a collector connected to the negative terminal side of the power supply via a load resistor, the switching means has an FET whose source is connected to the negative terminal of the power supply and whose gate is connected to the collector of the PNP transistor, and the base voltage of the PNP transistor is increased to a voltage at which the PNP transistor is not turned on in the broken state.

Preferably, the rotating means has comparing means for comparing a reference voltage with a comparison voltage generated based on the angle setting voltage and outputting a voltage for rotating the motor in the forward or reverse direction, the comparing means has a positive power supply terminal connected to the positive terminal side of the power supply and a negative power supply terminal connected to the negative terminal side of the power supply and, in the broken state, each of the reference voltage and the comparison voltage supplied to the comparing means is set to be equal to or lower than a voltage applied to the positive power supply terminal and equal to or higher than a voltage applied to the negative power supply terminal.

Preferably, the drain of the FET is connected to the negative power supply terminal of the comparing means, the reference voltage is generated from the voltage applied to the positive power supply terminal and the voltage applied to the negative power supply terminal, a potentiometer of which voltage from an output terminal changes according to the rotation of the motor is connected between the positive power supply terminal and the negative power supply terminal of the comparing means, and the comparison voltage is generated by combining the angle setting voltage and the voltage of the output terminal.

Preferably, the actuator is provided with a diode whose cathode is connected to the angle setting voltage input terminal side, and the comparison voltage is generated by combining an angle setting voltage obtained through the diode and the voltage of the output terminal.

Preferably, the diode is a schottky barrier diode. Embodiments of the invention will now be described, by way of example only, with reference to the accompanying drawings, in which;
Fig. 1 is a block diagram of an apparatus for adjusting the illuminating angle of a headlamp for a vehicle of the invention.
Fig. 2 is a block diagram of another example of the apparatus for adjusting the illuminating angle of a headlamp for a vehicle of the invention, and,
Fig. 3 is a block diagram of a conventional apparatus for adjusting the illuminating angle of a headlamp for a vehicle.

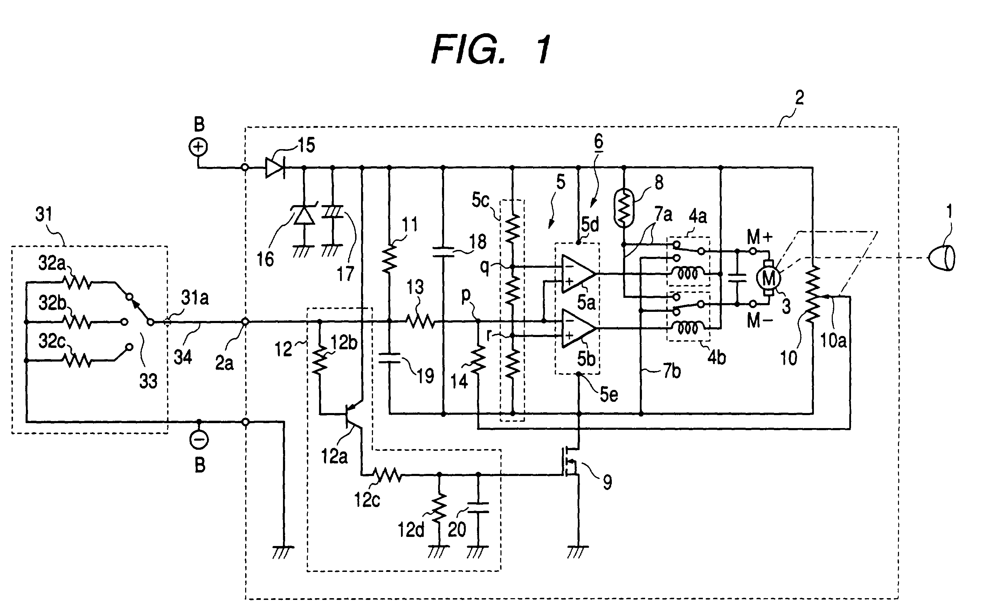

Fig. 1 is a block diagram of an apparatus for adjusting the illuminating angle of a headlamp for a vehicle of the invention. The apparatus is characterized in that a switching means 9 and a break detecting means 12 for turning off the switching means 9 are provided in an actuator 2.

First, a headlamp 1 is tilted so that its light axis direction vertically changes by the forward or reverse rotation of a motor 3 provided for the actuator 2. The rotational direction of the motor 3 is changed by a rotating means 6 comprising relays 4a and 4b and a window comparator 5. A voltage of a power supply B is applied in the forward or reverse direction to one end (M+) and the other end (M-) of the motor 3 by the switching of the relays 4a and 4b. The switching of the relays 4a and 4b is controlled by the window comparator 5. A current flows from the positive terminal of the power supply B into the motor 3 through a high potential side voltage supply line 7a. The current flows to the negative terminal (ground) of the power supply B via a low potential side voltage supply line 7b.

A thermistor 8 is provided at some midpoint in the high potential side voltage supply line 7a. An N-channel FET 9 as switching means is provided at some midpoint in the low potential side voltage supply line 7b. The drain of the FET 9 is connected to the relays 4a and 4b and the source is connected to the ground.

The window comparator 5 as comparing means has two comparing circuits 5a and 5b and a reference voltage setting circuit 5c. The comparing circuits 5a and 5b are formed in a package as an IC and have two power supply terminals. A positive power supply terminal 5d as one of them is connected to the positive terminal of the power supply B and a negative power supply terminal 5e as the other terminal is connected to the negative terminal of the power supply B via the FET 9.

The reference voltage setting circuit 5c is comprised of three resistors which are connected in series. The resistors connected in series are connected between the positive power supply terminal 5d and the negative power supply terminal 55 and generate two reference voltages. The reference voltages are supplied to reference voltage terminals of the comparing circuits 5a and 5b.

A potentiometer 10 is connected in parallel between the positive power supply terminal 5d and the negative power supply terminal 5e of the comparing circuits 5a and 5b and the voltage of the power supply B is applied also to the potentiometer 10. The potentiometer 10 rotates or slides in accordance with the rotation of the motor 3 so that the voltage of the output terminal 10a changes.

The actuator 2 constructed as described above is mounted in a housing (not shown) in which the headlamp 1 is housed.

On the other hand, a voltage dividing means 31 for setting the illuminating angle of the headlamp 1 has a plurality of voltage dividing resistors 32a to 32c of different resistance values and a change-over switch 33. A positive voltage of the power supply B is applied to one end of any of the voltage dividing resistors 32a to 32c via a feed resistor 11 provided in the actuator 2 and the change-over switch 33 which are provided in series. The other ends of the voltage dividing resistors 32a to 32c are connected to each other and connected to the ground. Consequently, a voltage divided by the feed resistor 11 and any one of the voltage dividing resistors 32a to 32c is obtained from the voltage dividing means 31. The divided voltage is used to set the illuminating angle of the headlamp 1 and will be called an angle setting voltage hereinbelow. The voltage dividing means 31 is provided in the cabin of the vehicle and the angle setting voltage is sent to the actuator 2 via a signal line 34 connecting an output terminal 31a of the voltage dividing means 31 and an angle setting voltage input terminal (input terminal) 2a of the actuator 2.

The break detecting means 12 for detecting a broken state of the signal line 34 is provided in the actuator 2. The break detecting means 12 has a PNP transistor 12a and its base is connected to the input terminal 2a via a base resistance 12b and biased by the angle setting voltage. The emitter is connected to the positive terminal of the power supply B. The collector is connected to the ground via load resistances 12c and 12d connected in series. The connection point between the load resistances 12c and 12d is connected to the gate of the FET 9.

The value of the base resistance 12b is set so that the PNP transistor 12a is turned on by the angle setting voltage set by the voltage dividing means 31 and is sufficiently larger than that of the feed resistor 11, the voltage dividing resistors 32a to 32c, or the like. When the PNP transistor 12a is turned on, the collector voltage increases and the FET 9 is turned on. As a result, the voltage of the power supply B is applied to the motor 3 and across the window comparator 5 and the motor 3 and the window comparator 5 become operable.

The angle setting voltage sent from the voltage dividing means 31 and the voltage from the output terminal 10a of the potentiometer 10 are combined by combining resistors 13 and 14 and the combined voltage is supplied as a comparison voltage to comparison voltage terminals of the two comparing circuits 5a and 5b.

In the configuration, when the combined voltage (voltage at the point P in Fig. 1) based on the angle setting voltage and the voltage from the output terminal 10a is out of the range of the two reference voltages (voltages at the points q and r in Fig. 1) set by the reference voltage setting circuit 5c, the motor 3 is rotated by the window comparator 5 so that the combined voltage is changed to be within the range of the two reference voltages. The voltage from the output terminal 10a of the potentiometer 10 changes in association with the motor 3 and the combined voltage accordingly becomes close to the two reference voltages. When the combined voltage enters the range of the two reference voltages, the rotation of the motor 3 is stopped. The light axis direction of the headlamp 1 is consequently changed by the change-over switch 33 in the voltage dividing means 31 so that the illuminating angle can be changed.

On the other hand, in the state where the signal line 34 is broken, a current is not passed to the voltage dividing means 31 via the feed resistor 11. Since the input terminal 2a is connected to the positive terminal side of the power supply B via the feed resistor 11, the voltage of the input terminal 2a increases. By the increase in voltage, the PNP transistor 12a is turned off, the collector voltage drops, and the FET 9 controlled by the PNP transistor 12a is turned off. That is, the resistance values of the resistors 11, 13, 14, and 12b and the potentiometer 10 are set so that the PNP transistor 12a is not turned on (base-emitter voltage Vbe is 0.6 V or lower) when the signal line 34 is broken.

A current is not therefore passed to the motor 3, the rotation is stopped, and the tilt of the headlamp 1 is also stopped.

Since the FET 9 is provided on the low potential side, the low potential side voltage supply line 7b can be interrupted with a simple configuration and an increase in the cost is a little.

On the other hand, when the FET 9 is turned off, the voltage of the low potential side voltage supply line 7b increases to the voltage of the power supply B and the voltage of the output terminal 10a of the potentiometer 10 also increases. Each of the voltage of the reference voltage input terminal of the window comparator 5 and the voltage of the comparison voltage input terminal also increases to the voltage of the power supply B. Consequently, each of the voltage of the reference voltage input terminal and the voltage of the comparison voltage input terminal does not become equal to or higher than the voltage of the positive power supply terminal 5d of the comparing circuits 4a and 4b and similarly does not become equal to or lower than the voltage of the negative power supply terminal 5e. Thus, the comparing circuits 4a and 4b are not destroyed.

The voltage of the power supply B is supplied to the actuator 2 via a diode 15 for preventing backflow and is clamped by a Zener diode 16. Power supply noise is reduced by an electrolytic capacitor 17 which is connected to the Zener diode 16 in parallel. Further, capacitors 18, 19, and 20 for reducing noise are connected between the positive power supply terminal 5d and the negative power supply terminal 5e of the window comparator 5, between the input terminal 2a and the negative power supply terminal 5e, and between the gate of the FET 9 and the ground, respectively. An erroneous operation caused by unnecessary noises is prevented by the capacitors 17, 18, 19, and 20.

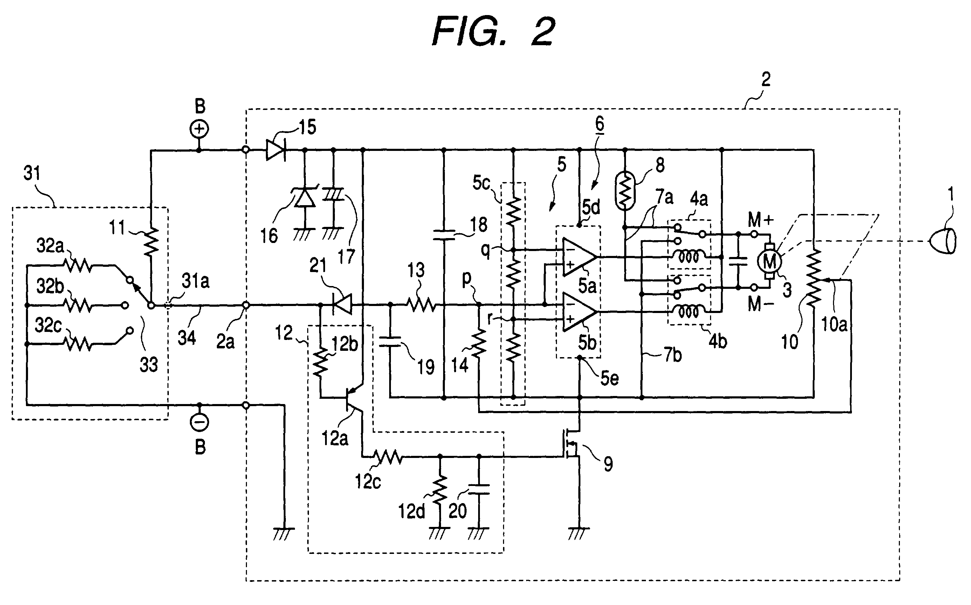

Fig. 2 is a block diagram showing another example of the apparatus for adjusting the illuminating angle of the headlamp for a vehicle of the invention. Different points from Fig. 1 are that the feed resistor 11 is provided for the voltage dividing means 31 and, in association with this, a diode 21 for preventing backflow is provided between the connection point of the base of the PNP transistor 12a and the input terminal 2a and the window comparator 5. The cathode of the diode 21 is connected to the input terminal 2a side. In this case, even when the signal line 34 is broken, the base current of the PNP transistor 12a does not flow to the window comparator 5 because of the diode 21 and the PNP transistor 12a is turned off. Consequently, the break in the signal line 34 can be detected without depending on the resistance values of the various resistors 11, 13, 14, and 12b and the potentiometer 10.

Even in the case where the diode 21 is provided, as shown in Fig. 1, the feed resistor 11 can be provided within the actuator 2.

When a schottky diode is used as the diode 21, a drop of the angle setting voltage is reduced and the degree of freedom in designing is accordingly increased.

Although the motor 3 is driven by using the comparing circuits 5a and 5b and the relays 4a and 4b in the examples of Figs. 1 and 2, it is also possible to use an operational amplifier in place of the comparing circuits 5a and 5b and drive the motor directly by the operational amplifier.

As described above, the apparatus for adjusting the illuminating angle of a headlamp for a vehicle of the invention comprises the break detecting means for detecting a broken state of the signal line connecting the actuator for tilting the headlamp and the voltage dividing means for outputting the angle setting voltage for setting the illuminating angle of the headlamp. When the broken state is detected, the voltage supply line for supplying the voltage for driving the motor is interrupted, so that the motor is not keeping on rotating but is stopped. Consequently, there is no possibility that the motor is heated or damaged. Also in the case where the signal line is nearly broken, the light axis of the headlamp does not fluctuate in the vertical direction, so that it is safe for driving.

In the apparatus for adjusting the illuminating angle of a headlamp for a vehicle according to the invention, switching means is provided at a some midpoint in the low potential side voltage supply line. In the broken state, the low potential side voltage supply line is interrupted by the switching means. Consequently, the voltage supply line can be interrupted with a simple configuration.

In the apparatus for adjusting the illuminating angle of a headlamp for a vehicle according to the invention, the base voltage of the PNP transistor is increased to a voltage at which the PNP transistor is not turned on when the signal line is in the broken state. The voltage of the angle setting voltage input terminal to which the angle setting voltage is supplied is allowed to change to almost the positive voltage of the power supply. Since the transistor in the break detecting means which is turned on by the angle setting voltage is automatically turned off, the broken state can be easily detected.

In the apparatus for adjusting the illuminating angle of a headlamp for a vehicle according to the invention, each of the reference voltage and the comparison voltage supplied to the comparing means in the rotating means is set to be equal to or lower than the voltage applied to the positive power supply terminal in the comparing means and equal to or higher than the voltage applied to the negative power supply terminal. Thus, the comparator or operational amplifier generally used as the comparing means is not destroyed.

In the apparatus for adjusting the illuminating angle of a headlamp for a vehicle according to the invention, the drain of the FET is connected to the negative power supply terminal of the comparing means, the reference voltage is generated from the voltage applied to the positive power supply terminal and the voltage applied to the negative power supply terminal, the potentiometer is connected between the positive power supply terminal and the negative power supply terminal of the comparing means, and the comparison voltage is generated by combining the angle setting voltage and the voltage of the output terminal. Consequently, in the signal line broken state, the base voltage increases to the voltage at which the PNP transistor is not turned on and does not increase further. Simultaneously, the base voltage does not become equal to or lower than the voltage of the negative power supply terminal. The window comparator is not therefore destroyed.

In the apparatus for adjusting the illuminating angle of a headlamp for a vehicle according to the invention, the actuator is provided with the diode whose cathode is connected to the angle setting voltage input terminal side, and the comparison voltage is generated by combining the angle setting voltage obtained through the diode and the voltage of the output terminal. Consequently, the feed resistor for supplying the voltage of the power supply to the voltage dividing means can be provided in either the actuator side or the voltage dividing means side. The degree of freedom in designing is increased.

In the apparatus for adjusting the illuminating angle of a headlamp for a vehicle according to the invention, as the diode, a schottky barrier diode is used. A drop in voltage in the diode is suppressed so that the degree of freedom in designing the angle setting voltage is increased.

## Claims

1. An apparatus for adjusting the illuminating angle of a headlamp for a vehicle, comprising:
an actuator for tilting a headlamp;
voltage dividing means for outputting an angle setting voltage for setting an illuminating angle of the headlamp; and
a signal line connected between the actuator and the voltage dividing means,
wherein the actuator has:
a motor for changing the tilt angle of the headlamp; and
rotating means for rotating the motor in the forward or reverse direction by the angle setting voltage,
the angle setting voltage is supplied to the rotating means via the signal line,
the actuator is provided with break detecting means for detecting a broken state of the signal line, and
when the break detecting means detects the broken state, a voltage supply line for supplying a voltage for driving the motor is interrupted.

2. An apparatus for adjusting the illuminating angle of a headlamp for a vehicle according to claim 1, wherein the voltage supply line has a high potential side voltage supply line provided between the motor and the positive terminal of a power supply and a low potential side voltage supply line provided between the motor and the negative terminal of the power supply, switching means is provided at a some midpoint in the low potential side voltage supply line, and the low potential side voltage supply line is interrupted by the switching means in the broken state.

3. An apparatus for adjusting the illuminating angle of a headlamp for a vehicle according to claim 2, wherein the actuator has an angle setting voltage input terminal to which the signal line is connected and the angle setting voltage is supplied, the break detecting means includes a PNP transistor having a base connected to the angle setting voltage input terminal side, an emitter connected to the positive terminal side of the power supply, and a collector connected to the negative terminal side of the power supply via a load resistor, the switching means has an FET whose source is connected to the negative terminal of the power supply and whose gate is connected to the collector of the PNP transistor, and the base voltage of the PNP transistor is increased to a voltage at which the PNP transistor is not turned on in the broken state.

4. An apparatus for adjusting the illuminating angle of a headlamp for a vehicle according to claim 3, wherein the rotating means has comparing means for comparing a reference voltage with a comparison voltage generated based on the angle setting voltage and outputting a voltage for rotating the motor in the forward or reverse direction, the comparing means has a positive power supply terminal connected to the positive terminal side of the power supply and a negative power supply terminal connected to the negative terminal side of the power supply and, in the broken state, each of the reference voltage and the comparison voltage supplied to the comparing means is set to be equal to or lower than a voltage applied to the positive power supply terminal and equal to or higher than a voltage applied to the negative power supply terminal.

5. An apparatus for adjusting the illuminating angle of a headlamp for a vehicle according to claim 4, wherein the drain of the FET is connected to the negative power supply terminal of the comparing means, the reference voltage is generated from the voltage applied to the positive power supply terminal and the voltage applied to the negative power supply terminal, a potentiometer of which voltage from an output terminal changes according to the rotation of the motor is connected between the positive power supply terminal and the negative power supply terminal of the comparing means, and the comparison voltage is generated by combining the angle setting voltage and the voltage of the output terminal.

6. An apparatus for adjusting the illuminating angle of a headlamp for a vehicle according to claim 5, wherein the actuator is provided with a diode whose cathode is connected to the angle setting voltage input terminal side, and the comparison voltage is generated by combining an angle setting voltage obtained through the diode and the voltage of the output terminal.

7. An apparatus for adjusting the illuminating angle of a headlamp for a vehicle according to claim 6, wherein the diode is constituted of a schottky barrier diode.
